# EUROPEAN PATENT APPLICATION

(11) **EP 2 682 336 A1**
(43) Date of publication of application: **08.01.2014**
(21) Application number: 12382270.2
(22) Date of filing: 05.07.2012
(51) Int. Cl.: B63B 3/06, B63B 35/38, E02B 3/06

(54) **A modular floating dock system**

(71) Applicant: Marine System Europa S.L., 27003 Lugo (ES)
(72) Inventor: Ramos Fraga, Dario, 27003 Lugo (ES)
(74) Representative: Álvarez Flores, Alberto

(57) **Abstract**

A modular floating dock system for a maritime, fluvial use, for nautical recreation or for support of the civil works.

The system presents a series of elementary cubes, or base-cubes (1), which form the structure, interlinked to each other in a jointed form by means of connectors in the form of perforated projections (14) and bolts (2,8).

Anchorage-cubes (4) with perforated projections (44) can anchor on perforated projections (14) of the base-cubes (1) in order to form a reception space and boat docking.

## Description

### FIELD OF THE INVENTION

The object of the present invention belongs to the field of technique of floating structures by modules, adequate for maritime, fluvial use, for nautical recreation or for support of civil works.

The system of the present invention presents a series of elementary cubes, o base-cubes, which form a floating structure; the aforementioned elementary cubes being interlinked to each other in a jointed form by means of connectors, forming any type of geometry.

### BACKGROUND OF THE INVENTION

Floating docks in fluvial zones, ports, etc are known in the state of the art, mainly made of wood and metal materials which are not convenient from the point of view of security, maintenance, installation or reconfiguration of the already assembled structure.

Many of these structures require additional elements and pains to allow the reception and boat docking in the occasions of a complicated manner.

### DESCRIPTION OF THE INVENTION

A modular floating dock system, object of the present invention, have of a series of hollow elementary cubes, each base-cube presenting: its four vertical edges beveled and a quarter of countersink on each of its four upper vertexes. On a point of each of the aforementioned vertical bevel edges is situated an anchored perforated projection or a connection ring. The four projections of a same cube can be anchored on the same height as their corresponding edge, or can be situated on slightly different heights in order to facilitate the coupling among the cubes.

The dock is formed by the coupling of the mentioned elementary cubes, or base-cubes. When four elementary cubes are coupled, forming an upper square surface, thanks to their bevel the four shared edges present a hole in which are accommodated the four corresponding projections to the confronting edges with their aligned perforation and the upper vertexes of the confronting vertexes forming a complete countersink. In this way it can be introduced the shank of a central bolt in the hole left for the four confronting beveled edges which anchors in the perforation of the aligned projections inside the aforementioned hole. The head of the aforementioned bolt remains accommodated in the above mentioned complete countersink. In this way, the four jointed cubes are kept.

In order to improve the coupling of elementary cubes, their vertical walls present vertical recesses and projections, presenting two consecutive lateral faces, a contrary order among them of the recessed zones and the projection zones. In this way, the recesses of one face of the cube fit into the projections of the contact face with another adjacent cube providing a greater firmness.

The lower face of the elementary cube, which is the one submerged in water, presents in its lower surface a cross-shaped recess with arms which allow the drainage of the water creating a constant recirculation of water without raising resistance to the water, not having a plane lower surface of the cube. Thanks to this configuration better buoyancy and less buckling (vertical movement) is managed, obtaining great stability.

Illuminating-cubes, which add a bright spotlight, can be incorporated in the assembled dock on the basis of elementary cubes. These illuminating-cubes also present at least one of their four vertical bevel edges, the given beveled edge also including a quarter of countersink on its upper vertex and a perforated lateral projection on a point of the mentioned vertical bevel edge. These perforated projections can be hooked to any of the accessible holed projections of the elementary cubes of the dock. The vertical walls of the illuminating-cube can present vertical projections and recesses for attaching themselves to the vertical walls of the elementary cubes of the dock.

On the dock, assembled on the basis of elementary cubes (base-cubes), some illuminating-cubes without a colour pigment can be incorporated, with a semi-translucent tone which incorporates a band of LED. This band of LED settles in the semi-translucent base-cube by a valve which can be connected to a transformer and directly to the electric grid. As an alternative, a solar panel can be installed which, going to the unpigmented base-cube, captures the UV rays and generates light by means of the same previously mentioned system of band of LED. These illuminating-cubes can present the same geometry or a configuration of the base-cubes.

A part with the form of a receptor cot of embarkation can be incorporated, which serves as a dock for scooters and light boats and which functions by actuation of the boat itself in order to have a dry docking in line (nose/tale), avoiding contact with the water. The mentioned part consists of an anchorage-cube (or a "slider") with a recess on its upper surface similar in form to the hull of the type of boats which it is expected to receive, with four vertical bevel edges and, in addition to the mentioned anchorage-cube, including a lateral perforated projection on a point of each of the mentioned vertical bevel edges above the lower point of the mentioned recess, being able to be the point of anchorage of the perforated projections of the same side of the recess on different heights. The perforated lateral projections of this anchorage-cube can be hooked by means of bolts to the free perforated lateral projections of elementary cubes.

Therefore, docks can be formed that can allow docking of all types of boats in a dry dock turning to a system of impulse which is something new for the technology of dikes or floating docks. Therefore, this system, with an evolutionary concept, avoids from the necessity of fixed structures which turn to heavy motorization for the elevation of scooters (watercraft), jets, boats of the type "outboard" or "sterndrive"

The ideal combination of elementary cubes and anchorage-cubes ("sliders") meets all the requirements of such heavy equipment as motors, gears, cables, etc. for the elevation of any type of boat.

Therefore, the docks, object of the present invention, are set up by a simple assembly of modular cubes without any type of mobile part, supporting all types of boats in a secure way, allowing easy manoeuvres of arrival and departure of the boats, ensuring a simple and easy dock.

In order to have movement of the whole set of the dock on the water, with the help of a boat, an auxiliary element with solid moorings in a winch with a traction system can be incorporated. Additionally or alternatively, a crosstree with a headboard of reinforced moorings can be included.

A modular floating dock or structure, irrespective of its structural design, will be able to be anchored by means of piles, like the traditional piers of aluminium or wood. This system of piles serves as a guide for the ascent and descent of the sea. In order to allow this, the elementary cubes can be hooked through free perforated projections to an auxiliary fitting which is anchored to a pile. The mentioned auxiliary fitting presents typically a ring-shaped quadrangular body with at least one perforated projection in each of its four edges, and a horizontal roller anchored on each of the four sides of the square formed in its internal hole. These rollers will roll on the surface of the piles. The geometry of the rollers will be chosen in accordance with the geometry of the piles.

Elements of lateral defence of the dock can be incorporated, which present a slightly arched form with a perforated projection in each of their two ends which allows their coupling with the perforated projections of other cubes that are present on the dock.

An auxiliary plate can be incorporated in the structure, which include; principal body-plate the width of which is a multiple of the width of the vertical walls of the base-cube and at least one perforated laminar projection in each of its vertical sides, the surface of the mentioned perforated laminar projection being on a perpendicular plane to the principal body-plate, and with a complementary inclination to that of the bevel of the vertical edges of the mentioned principal bodies.

The perforations of different projections, which remain accessible, can accommodate a bolt-ring that can glide. This type of bolt-ring can also be utilized for its anchorage from a plurality of perforated rings of different elements when the extraction of the same is possible.

The cubes can be made with the refined compound HDPE (polyethylene with high density) forming modular cubes, light but with a highest resistance, stiff and lasting, they provide a totally new experience also thanks to their resistance to UV radiation, their being inflammable and having an antistatic treatment. This allows that the characteristics in the open part of the cubes permit that this system of docks be able to be left in the water during the whole winter, including conditions of ice, being prepared to overcome maritime states of high agitation. The HDPE provides a strong resistance to the salt residue, oils and other pollutants, as well as to the corrosion of acids. Its use in salty or sweet water does not result in alteration of the colours of the cubes.

All the constituent elements of the dock, especially the elementary cubes, present rounded and smooth edges. The exterior surface of the cubes receives an antiskid treatment with the aim of minimizing the possibility of accidents. In this way, floating docks of high security are obtained, more than that of other system of dikes or floating docks built of wood or metal.

The product possesses high characteristics of security added to the proportional autoregulation thanks to the described technical characteristics of its components in relation with the levels of roll of the waters.

In this way, a very practical and extremely functional system is achieved, adequate for the major part of situations in which it is necessary to realize a provisional or permanent docking or mole for embarkations or transfer or transit of passengers because of emergency, a specific case or simply for access to the solid ground and vice versa.

A modular system allows an easy disassembling and transporting, as well as a quick and easy implementation or reconfiguration of the dock to form.

Apart from the previously mentioned facts, this system can be utilized for assembly of diverse structures, such as:
Floating boxes used for shows made in the margins or lines of the water (sea, lake, dams and similar things), forming a stylized and rigid structure with systems of anchoring, like piles or universal systems.
- For supporting structures or docks, because of its easy installation, transporting and speed of its installation.
Mobile swimming pools or with fixed installation, the fixation would be the same form as the boxes and the moles or piers.
Recreation docks.
Fish farms.
- Barrier walls for retaining combustible spillages in the water.
- Barrier walls and docks of logistic barrier walls for security bodies and patrol of the coasts.
- For maintenance works of the structures that require temporary maritime supporting docks.

The system results in docks which are aesthetically pleasant, easy to use, easy to assemble and easy to maintain; they are light, long-lasting and made of materials which are respectful to the environment.

### BRIEF DESCRIPTION OF THE FIGURES

- FIGURE 1: Perspective view of four elementary cubes (base-cubes) ready for their hooking.
- FIGURE 2: Perspective view of the four elementary cubes of Figure 1 hooked.
- FIGURE 3: View of the upper floor of an elementary cube.
- FIGURE 4: View of the lower floor of an elementary cube.
- FIGURE 5: Perspective view of an anchorage-cube ("slider").
- FIGURE 6: Views of the elevation, side and the floor of an anchorage-cube ("slider").
- FIGURE 7: Perspective view of an illuminating-cube.
- FIGURE 8: Perspective view of a crosstree with a head of reinforced moorings.
- FIGURE 9: Perspective view of a winch with a traction structure.
- FIGURE 10: View of the upper floor of an auxiliary element for the anchorage of elementary cubes in piles.
- FIGURE 11: Perspective view of a central bolt.
- FIGURE 12: Perspective view of a lateral defence.
- FIGURE 13: Perspective view of a sliding bolt-ring.
- FIGURE 14: Perspective view of a detail of a dock-pool.

### PREFERRED EMBODIMENT OF THE IN INVENTION

In continuation a preferred realization of the invention is detailed, which should be understood in a wide and not in a limitative sense.

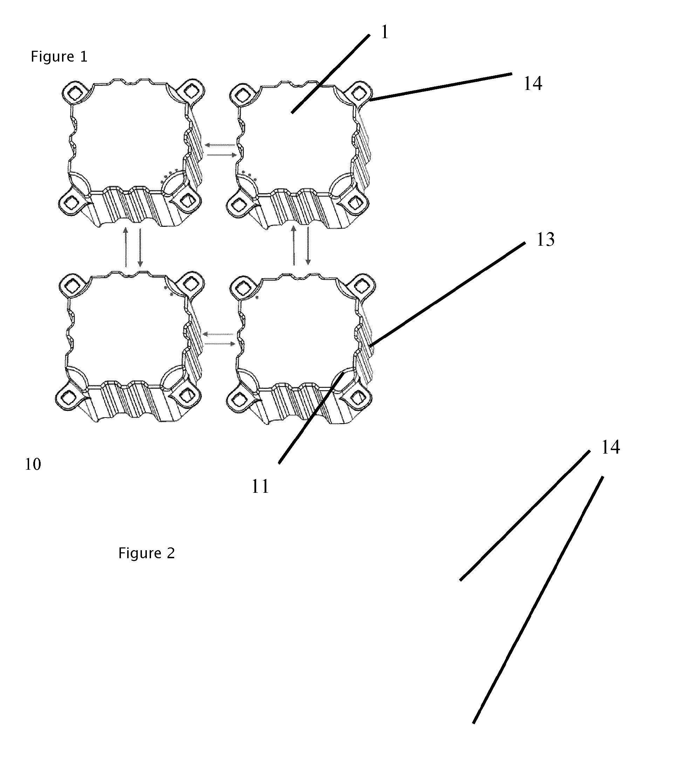

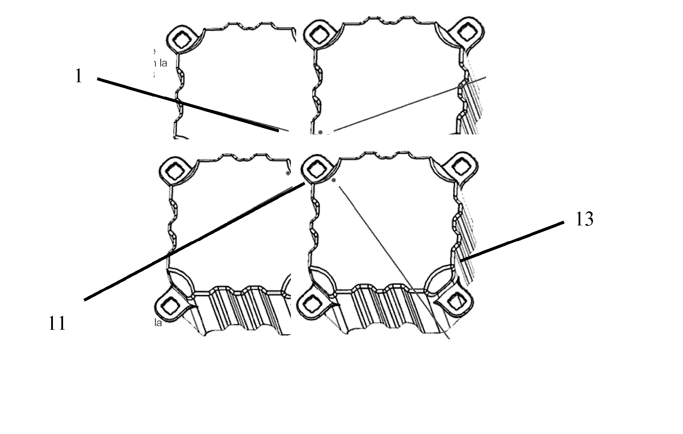

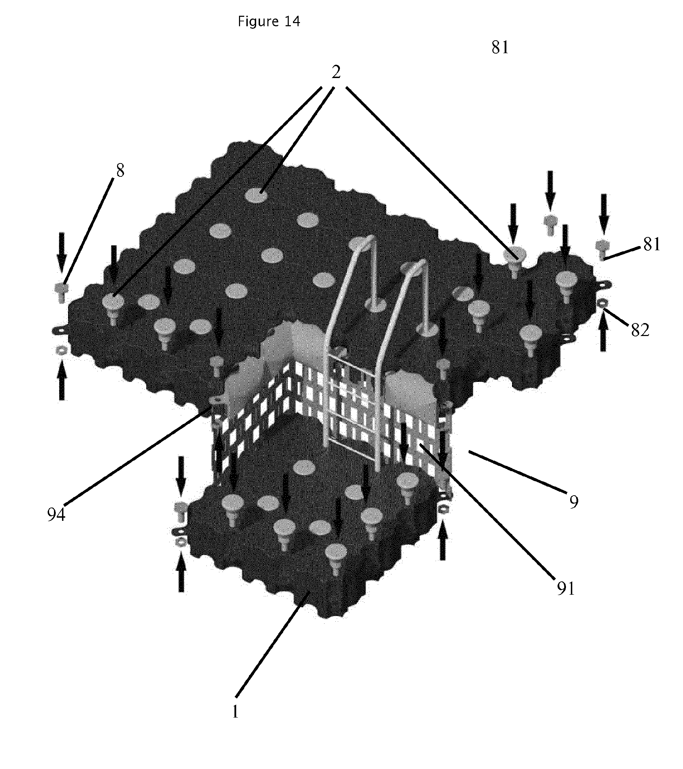

In the Figures 1 to 4 details of elementary cubes (1) are shown with vertical bevel edges which form floating docks like that of the Figure 14.

In Figure 1 the components of the elementary cubes (1) with vertical bevel edges are observed: perforated projections (14) in each vertical edge of the elementary cube, a quarter of countersink in each upper vertex of the cube, and the vertical recesses and projections (13) throughout the surface of the vertical sides of the elementary cube.

The perforated projections or connection rings are on different heights in a way that once four base-cubes are connected, they remain perfectly aligned with their respective connection rings of the adjacent cubes (1) for their connection with the central bolt or pin (2) . They can be anchored on the same height of lateral edges of the elementary or base-cubes (1), allowing a junction without mutual cramping of these projections (14) like it is observed in Figure 2.

The elementary or base-cubes can be submerged by removing the safety valve from them and all, in order to be able to create submerged docks or floors for using them, for example, in or as swimming pools.

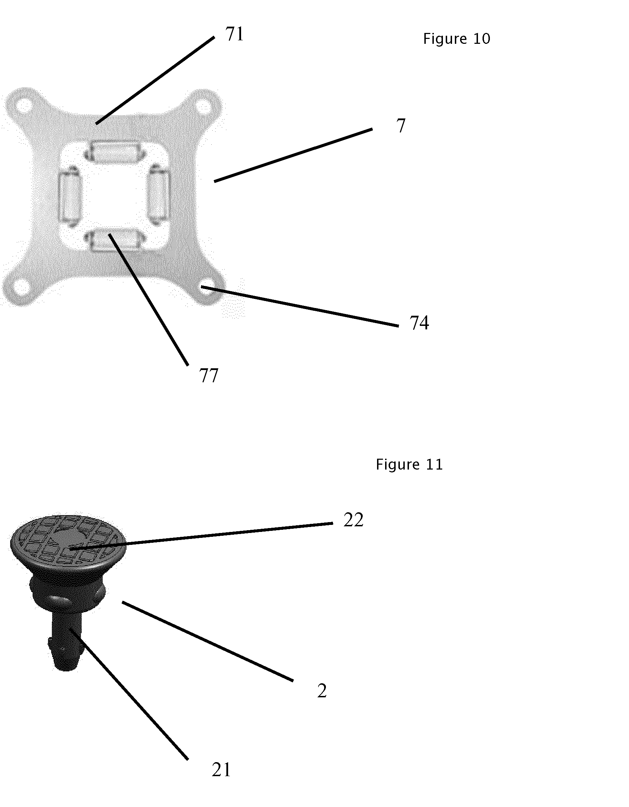

In Figure 2 the four elementary cubes of Figure 1 are shown in the perspective, which are anchored thanks to the vertical recesses and projections of the vertical faces and, especially, thanks to the perforated projections (14) which remain in the hole of the confronting bevel edges. In Figure 14 it is observed how the shank (21) of the central bolts (2) (see details of the central bolt in Figure 11) is accommodated in the holes left by the confronting bevel edges of the elementary cubes (2), and how the head (22) of the central bolts (2) is accommodated in the complete or partial countersink (11) formed on the surface of the elementary cubes (1).

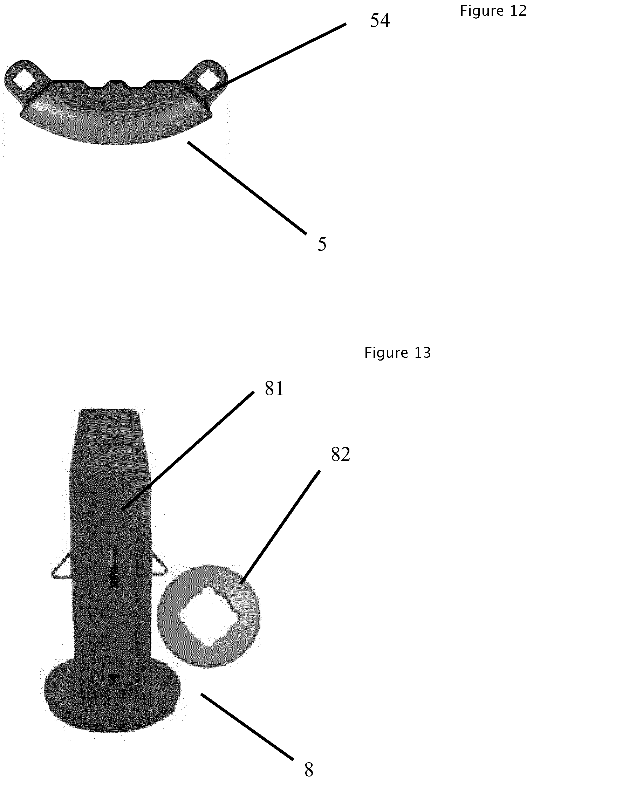

As it can be observed in Figure 14, the perforations of the perforated projections (14) of the elementary cubes (1) that remain free can accommodate other types of bolts like sliding bolt-rings (8) which are made up of the head, shank (81) and ring (82) as it can be observed in detail in Figure 13.

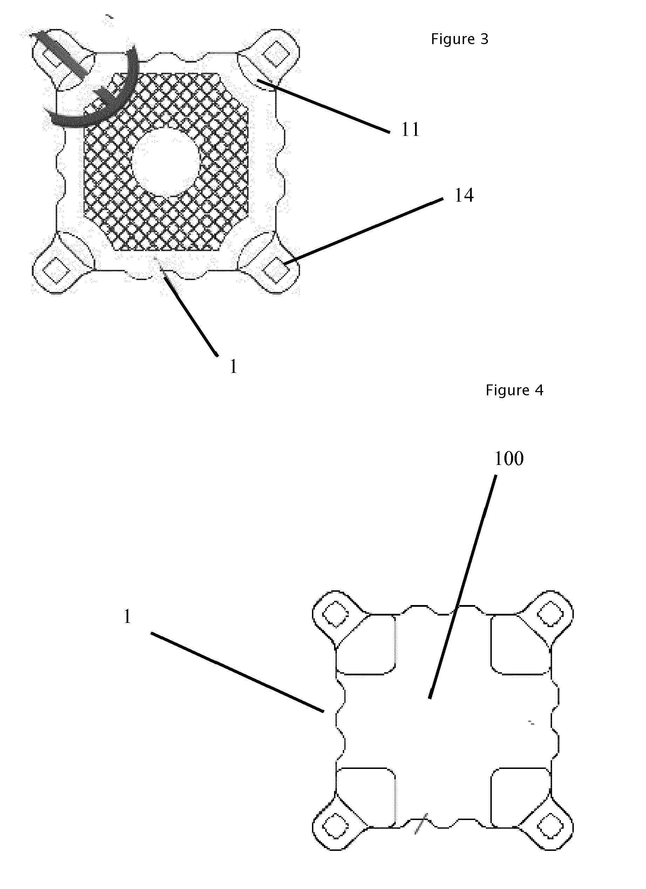

In Figure 3 the upper floor of an elementary cube (1) is observed with anti-slip treatment with recesses and projections.

In figure 4 a view of the lower floor of an elementary or base-cube (1) is seen with crossing recesses (100) in the form of a cross in order to allow drainage of the water.

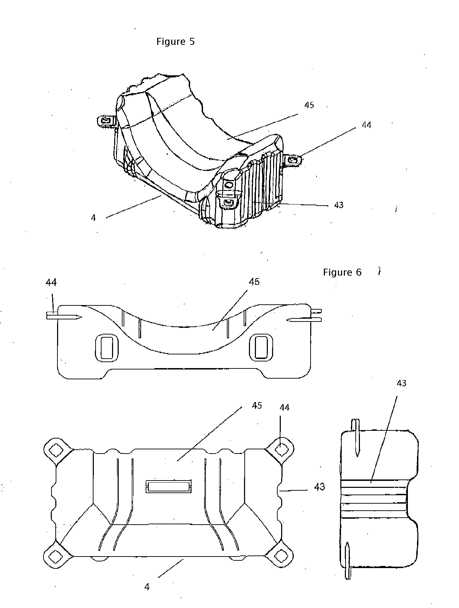

In the Figures 5 and 6 an anchorage-cube (4) ("slider") is observed, which presents vertical lateral walls with vertical projections and recesses (43), bevel edges with perforated projections (44) and a soft recess (45) which allows the reception and docking of boats.

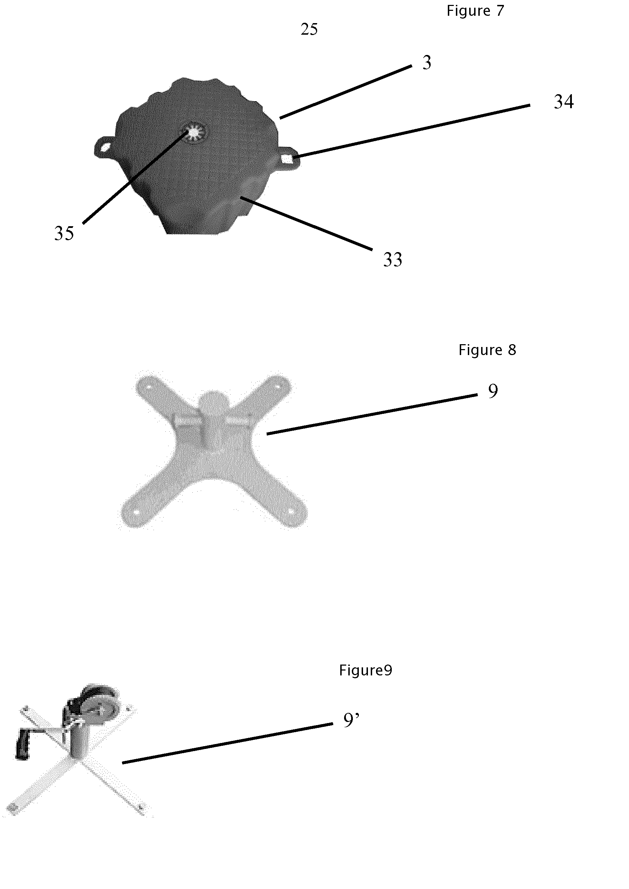

In Figure 7 an illuminating-cube (3) is observed, which presents vertical lateral walls with vertical projections and recesses (33), bevel edges with perforated projections (34) and a spotlight (35).

The anchorage-cubes (4) and the illuminating-cubes (3) are perfectly easy to get hooked to elementary cubes (1) presenting all the characteristics of similar dimensions as for bevels, recesses and projections (13, 33, 43) and perforations of the projections of the same (14, 34, 44).

In Figure 8 a crosstree is observed with the head of reinforced moorings (9) for its anchorage in the dock and for allowing the mooring of the same on the land, on other docks or on boats. Alternatively or additionally, Figure 9 shows a winch (9') with an upper structure of traction.

The elementary cubes can be hooked by means of the free perforated projections to an auxiliary accessory (7) (represented in Figure 10), which is anchored to a pile. The preferred auxiliary accessory (7) presents a square ring-shaped body (71) with a perforated projection (74) in each vertex, and a horizontal roller (77) anchored in each of the four sides of the square formed in its internal hole.

In Figure 12 an element of lateral defence (5) of the dock is shown which can be anchored to the elementary cubes by means of its own perforated projections (54).

In Figure 14 a detail of the dock-pool is shown, in which an auxiliary plate (9) is observed which comprises a principal body-plate (94) which forms the walls of the pool (the principal body-plate can present perforations in order for the water of the pool to be the water of the lake, river or sea on which the dock pool is installed). These auxiliary plates (9) are fixed to the perforated projections (14) of the elementary cubes (1) by means of their own perforated projections (94). The surface of the mentioned perforated laminar projection (94) is situated in a perpendicular plane to the principal body- plate (94), and with an inclination like that of the bevel of the vertical edges of the mentioned principal bodies (1), In Figure 14 the auxiliary plates (9) connect two different levels of the dock-pool, being the lower level of the elementary cubes, o base-cubes, at the bottom of the pool.

## Claims

1. A modular floating dock system, **characterized for** comprising:
- at least two hollow base-cubes (1) having their four vertical edges beveled, each of said base-cube (1) comprising:
○ a quarter of countersink (11) in each of its four upper vertexes,
○ a perforated lateral projection (14) in one point of each of said vertical beveled edges, and
- at least one central bolt (2), said central bolt subject to, when four base-cubes (1) put themselves together, accommodate its shank (21) in the hole formed by the four beveled edges shared by said base-cubes (1), be anchored in the perforations of said four projections (14) of the confronting edges of the four base-cubes, and accommodate the head (22) of the central bolt (2) in the countersink formed by the four quarters of countersink (11) confronted by said four base-cubes (2).

2. A modular floating dock system, according to the previous claim, **characterized for** the lower surface of said base-cube (1) having a cross-shaped recess (100), said recess reaching the perimeter of said lower surface.

3. A modular floating dock system , according to any of the previous claims, **characterized for** comprising, in addition, at least one illuminating-cube (3), said illuminating-cube (3) having at least one vertical edge beveled, said beveled edge comprising a quarter of countersink in its upper vertex and a perforated lateral projection, said illuminating-cube (3) comprising a spotlight.

4. A modular floating dock system, according to any of the previous claims, **characterized for** comprising, in addition, an illuminating-cube (3), said illuminating-cube (3) comprising a band of LED powered by an electrical source or a solar panel.

5. A modular floating dock system, according to any of the previous claims, **characterized for** comprising, in addition, an anchorage-cube (4) having a recess (45) in its upper surface and four vertical beveled edges, said anchorage-cube (4) comprising, in addition, a perforated lateral projection (44) in one point of each of said vertical beveled edges above the lower point of said recess (45), and for being the point of anchorage of two perforated projections (44) of the same side of the recess on different heights.

6. A modular floating dock system, according to any of the previous claims, **characterized for** the vertical walls of said base-cube (1), said illuminating-cube (3) and said anchorage-cube (4) having vertical recesses and vertical projections (13,33,43), and for having two consecutive lateral faces a contrary order between them of the zone of recess and the zone of projection.

7. A modular floating dock system, according to the previous claim, **characterized for** comprising, in addition, at least one lateral defence (5) in a slightly arched form that comprises a perforated projection (54) in each of its two sides.

8. A modular floating dock system, according to any of the previous claims, **characterized for** comprising, in addition, at least one mooring winch (6).

9. A modular floating dock system, according to any of the previous claims, **characterized for** comprising a mooring winch (6) having a traction system.

10. A modular floating dock system, according to any of the previous claims, **characterized for** comprising, in addition, at least one auxiliary element of anchorage (7) to piles, including at least one ring-shaped body (71) having, at least, one perforated projection (74) in one point of its external periphery, and including at least two horizontal rollers (77') anchored in two confronting points of the internal periphery of a said ring-shaped body(71).

11. A modular floating dock system, according to any of the previous claims, **characterized by** comprising, in addition, at least one auxiliary plate (9), said auxiliary plate (9) comprising a principal body-plate (94) having a width as a multiple of the width of the vertical walls of the base-cube (1), and at least one perforated laminar projection (74) in each of its vertical sides, the surface of said perforated laminar projection being in a perpendicular plane to the principal body-plate (94), and having an inclination like that of the bevel of the vertical edges of said principal bodies (1).

12. A modular floating dock system, according to any of the previous claims, **characterized by** comprising, in addition, at least one sliding bolt-ring (8), said sliding bolt-ring comprising one shank (81) compatible with the perforations of said perforated projections of any of the previous claims, a head, and an associated ring (82).

13. A modular floating dock system, according to any of the previous claims, **characterized for** the material of production of said base-cube (1) being HDPE.

14. A modular floating dock system, according to any of the previous claims, **characterized for** the material of production of said central bolt (2) is HDPE.

15. A modular floating dock system, according to any of the previous claims, **characterized for** the material of production of said anchorage-cube is HDPE,
